# DEMANDE DE BREVET EUROPEEN

(11) **EP 3 828 866 A1**
(43) Date de publication de la demande: **02.06.2021**
(21) Numéro de dépôt: 20208123.8
(22) Date de dépôt: 17.11.2020
(51) Int. Cl.: G08G 5/00, G01S 13/933, G01S 5/00, G01S 13/91, G01S 19/42, G06N 20/00

(54) **PROCEDE ET DISPOSITIF POUR LA DETERMINATION DE TRAJECTOIRES D'ELEMENTS MOBILES**

(30) Priorité: 27.11.2019 FR 1913277
(71) Demandeur: THALES, 92400 Courbevoie (FR)
(72) Inventeur: PURICA, Andrei, 94628 RUNGIS (FR); PESQUET, Béatrice, 94628 RUNGIS (FR); HONORE, Nicolas, 94628 RUNGIS (FR)
(74) Mandataire: Marks & Clerk France

(57) **Abrégé**

Procédé pour la détermination de trajectoire d'au moins un élément mobile à partir de données de position, caractérisé en ce qu'il comprend une étape initiale (201) consistant à classifier un ensemble de positions relatives à au moins un élément mobile détecté en appliquant un premier algorithme de classification de données audit ensemble de positions, ce qui fournit une trajectoire initiale relative à chaque élément mobile détecté. Le procédé comprend les étapes suivantes, mises en œuvre à chaque fenêtre d'observation courante:
- classifier (203) chaque nouvelle position détectée dans au moins une trajectoire en appliquant un second algorithme de classification de données;
- identifier (205), pour chaque élément mobile détecté, les positions relatives audit élément mobile détecté;
- déterminer (207) une trajectoire complète intermédiaire pour chaque élément mobile détecté;
- déterminer (209) une trajectoire complète finale pour chaque élément mobile détecté.

## Description

### Domaine technique

L'invention concerne de manière générale les systèmes de surveillance et en particulier la détermination de trajectoires d'éléments mobiles à partir de données de positions provenant d'une pluralité de sources de données de positionnement.

### Art Antérieur

La détection, le suivi et l'analyse du mouvement d'éléments mobiles (objets ou corps) constituent des procédés essentiels à la mise en œuvre de diverses applications, comme les applications de navigation, de surveillance, ou de sécurité.

En particulier, les systèmes de surveillance utilisent des dispositifs qui permettent de positionner des éléments en mouvement. De tels dispositifs comprennent, par exemple, des capteurs de position embarqués, des radars (routiers, ferroviaires, et aériens), et des systèmes de localisation ou de positionnement par satellites (par exemple, le système de positionnement global GPS ou 'Global Positionning System' en langue anglo-saxonne). Les données de position fournies par ces dispositifs sont traitées et analysées afin de détecter et de suivre dans le temps le mouvement d'éléments cibles.

Le mouvement (absolu ou relatif) d'un élément en mouvement est caractérisé par la trajectoire de l'élément et par l'évolution de la vitesse de l'élément dans le temps. La trajectoire d'un élément en mouvement représente l'ensemble des positions successives occupées par l'élément au cours du temps. La trajectoire représente un des moyens les plus utilisés dans les systèmes de surveillance pour décrire l'activité d'un élément sous-surveillance.

L'estimation de la trajectoire d'un élément en mouvement est classiquement réalisée en utilisant un filtre de Kalman, selon différentes variantes. Le filtre de Kalman est un outil récursif défini par un ensemble d'équations (linéaires ou non linéaires) pour estimer l'état d'un système. Dans des applications de détection et de suivi d'éléments en mouvement, le filtre de Kalman permet de déterminer la position, la vitesse, et l'accélération d'un élément en mouvement. Le filtre de Kalman est utilisé pour estimer la trajectoire d'un élément mobile en estimant, de façon itérative, la position de l'élément mobile. A chaque itération, le filtre de Kalman estime une position à l'instant courant à partir de la position observée à l'instant précédent correspondant à l'itération précédente. Une étape de correction suit l'étape d'estimation pour corriger la position prédite en utilisant la mesure courante.

Bien que les techniques d'estimation de trajectoires basées sur le filtrage de Kalman permettent de détecter et de suivre les éléments mobiles ainsi que de créer des trajectoires complètes décrivant l'activité des éléments mobiles au cours du temps, ces techniques présentent des limitations. En effet, les filtres de Kalman nécessitent un temps de traitement et de calcul intensif, ce qui ne permet pas d'assurer un suivi d'éléments mobiles en temps réel. Par ailleurs, ils nécessitent une latence considérable pour pouvoir obtenir des trajectoires complètes et lisses. En outre, la construction de trajectoires complètes en utilisant les filtres de Kalman se fait en intégrant, un par un, les tracés de trajectoires afin de séparer les fausses trajectoires de celles qui correspondent aux trajectoires cibles relatives à des éléments cibles. Un tel processus de construction nécessite un temps de traitement très important, ce qui limite l'implémentation de telles techniques dans les systèmes de surveillance appliqués à des applications de surveillance et de sécurité dans lesquelles un traitement en temps très réduit ou en temps réel est primordial. A ces limitations s'ajoute la sous-optimalité des techniques basées sur le filtrage de Kalman en termes de traitement, de fusion et d'interpolation des positions provenant de sources de données de positionnement différentes.

Il existe donc un besoin pour un dispositif et un procédé améliorés de détermination de trajectoires d'un élément mobile à partir de données de positions provenant de plusieurs sources de données de positionnement, ayant des temps de traitement et de calcul réduits.

### Définition Générale de l'invention

L'invention vient améliorer la situation. A cet effet, l'invention propose un procédé pour la détermination de trajectoire d'au moins un élément mobile à partir de données de position provenant d'une pluralité de sources de données de positionnement, mis en œuvre selon une fenêtre d'observation glissante. Le procédé est caractérisé en ce qu'il comprend une étape initiale consistant à classifier un ensemble de positions relatives à au moins un élément mobile détecté en appliquant un premier algorithme de classification de données audit ensemble de positions, ce qui fournit une trajectoire initiale relative à chaque élément mobile détecté, et en ce qu'il comprend les étapes suivantes, mises en œuvre à chaque fenêtre d'observation courante:
- classifier chaque nouvelle position détectée relative à au moins un élément mobile détecté reçue pendant la fenêtre d'observation courante dans au moins une trajectoire en appliquant un second algorithme de classification de données;
- identifier, pour chaque élément mobile détecté, les positions relatives à élément mobile détecté parmi l'ensemble de positions et les nouvelles positions détectées reçues pendant la fenêtre d'observation;
- déterminer une trajectoire complète intermédiaire pour chaque élément mobile détecté en appliquant un algorithme d'interpolation à au moins une trajectoire relative à l'élément mobile détecté et à toutes les positions relatives à l'élément détecté ;
- déterminer une trajectoire complète finale pour chaque élément mobile détecté à partir de la trajectoire complète intermédiaire relative audit chaque élément mobile détecté en appliquant un algorithme apte à supprimer de la trajectoire complète intermédiaire les positions non relatives audit élément mobile détecté.

Selon certains modes de réalisation, le premier algorithme de classification de données peut être un algorithme d'apprentissage machine.

Selon certains modes de réalisation, l'algorithme d'apprentissage machine peut être un algorithme d'apprentissage machine supervisé comprenant une phase d'apprentissage, la phase d'apprentissage utilisant comme données d'apprentissage les données de position provenant d'une pluralité de sources de données de positionnement et au moins une trajectoire prédéterminée en relation avec au moins un élément mobile détecté.

Selon certains modes de réalisation, l'algorithme d'apprentissage machine supervisé peut être choisi dans un groupe comprenant les machines vectorielles de support (SVM), la régression linéaire, la régression logistique, les forêts aléatoires, les arbres de décision, les algorithmes du voisin le plus proche, les réseaux de neurones, et l'apprentissage par similarité.

Selon certains modes de réalisation, l'algorithme d'apprentissage supervisé peut être un algorithme à un nombre d'entrées variables et un nombre de sorties fixes combinant un réseau de neurones entièrement connecté avec un réseau de neurones convolutif à une dimension.

Selon certains modes de réalisation, une nouvelle position détectée reçue peut être classifiée dans la trajectoire initiale relative à un élément mobile détecté si la nouvelle position détectée reçue est relative à un des éléments mobiles détectés, la nouvelle position détectée reçue étant classifiée dans une nouvelle trajectoire si la nouvelle position détectée reçue n'est pas relative à un élément mobile détecté.

Selon certains modes de réalisation, le second algorithme de classification de données peut être un algorithme d'apprentissage machine.

Selon certains modes de réalisation, l'algorithme d'interpolation peut être un algorithme d'apprentissage machine.

Selon certains modes de réalisation, l'algorithme d'interpolation peut être un algorithme à un nombre d'entrées variables et un nombre de sorties variables combinant un réseau de neurones entièrement connecté avec un réseau de neurones convolutif uni-dimensionnel.

Selon certains modes de réalisation, l'algorithme apte à supprimer les positions relatives à l'élément mobile détecté peut être un algorithme d'apprentissage machine supervisé.

Selon certains modes de réalisation, l'algorithme peut utiliser comme données d'apprentissage les données de position provenant d'une pluralité de sources de données de positionnement, les trajectoires complètes intermédiaires et la classification de chaque nouvelle position détectée reçue pendant une fenêtre d'observation courante.

Selon certains modes de réalisation, l'algorithme peut utiliser comme données d'apprentissage une ou plusieurs trajectoires prédéterminées en relation avec au moins un élément mobile détecté..

Avantageusement, les modes de réalisation de l'invention fournissent un procédé et un dispositif pour la détermination de trajectoires complètes d'au moins un élément mobile à partir de données de positions provenant de différentes sources de données de positionnement en permettant la fusion et l'interpolation de ces différentes données et la détermination de trajectoires complètes lisses et fiables en temps réduit.

Avantageusement, les modes de réalisation de l'invention permettent de déterminer la trajectoire d'au moins un élément mobile avec une haute précision des positions interpolées et une bonne régularité des trajectoires.

Les modes de réalisation de l'invention fournissent par ailleurs des algorithmes d'apprentissage machine capables d'apprendre des données brutes de positions provenant d'une pluralité de sources de données de positionnement afin de déterminer des trajectoires complètes, lisses, et régulières, avec un temps de réponse et une résolution temporelle plus courts que ceux requis dans les systèmes actuels mettant en œuvre des calculs intensifs et peu fiables.

Avantageusement, les modes de réalisation de l'invention mettent en œuvre des algorithmes et modèles d'apprentissage machine pour la classification des données de positions et l'interpolation des trajectoires partielles en les reliant en une seule trajectoire complète de manière fiable.

Les algorithmes d'apprentissage machine selon les différents modes de réalisation de l'invention permettent en outre la fusion et l'interpolation de différentes données brutes de position et d'une multitude de tracés provenant de différentes sources de données de positions de positionnement dans un système de surveillance.

### Brève description des dessins

D'autres caractéristiques et avantages de l'invention apparaîtront à l'aide de la description qui suit faite en référence aux dessins annexés, donnés à titre d'exemple, et qui représentent, respectivement :
[Fig.1] La figure 1 est un schéma représentant un exemple d'application de l'invention à un système de surveillance, selon certains modes de réalisation de l'invention.
[Fig.2] La figure 2 est un diagramme représentant un exemple d'architecture en blocs d'un dispositif de détermination de trajectoire complète d'au moins un élément mobile à partir de données de position provenant d'une pluralité de sources de données de positionnement, selon certains modes de réalisation de l'invention.
[Fig.3] La figure 3 est un organigramme représentant un procédé de détermination de la trajectoire complète d'au moins un élément mobile à partir de données de position provenant d'une pluralité de sources de données de positionnement, selon certains modes de réalisation de l'invention.

### Description détaillée

Les modes de réalisation de l'invention fournissent un procédé et un dispositif pour la détermination de trajectoire complète d'au moins un élément mobile à partir de données de position provenant d'une pluralité de sources de données de positionnement.

Tel qu'utilisé ici, un élément mobile fait référence à un objet mobile ou à un corps mobile.

Un objet mobile peut être par exemple un objet en mouvement au sol, dans l'air, ou dans un milieu marin. Des exemples d'objets mobiles comprennent des véhicules routiers, des stations de transport intelligent mobiles (ex. les voitures connectées), des véhicules ferroviaires, des véhicules maritimes, des robots, des aéronerfs (ex. avion, hélicoptère, montgolfière, drone), etc. De tels objets peuvent être déployés dans diverses applications comme les systèmes de transports intelligents mettant en œuvre des véhicules connectés et des stations de bords de route mobiles pour les communications entre véhicules et entre véhicules et l'infrastructure, l'internet des objets, et le contrôle du trafic routier ou ferroviaire ou aérien ou maritime.

Un corps mobile peut être une personne mobile ou un corps animalier mobile dont le mouvement est suivi, par exemple à des fins de surveillance (ex. assistance médicale à distance, la surveillance de conducteurs) ou de sécurité (ex. la navigation piétonne, la sécurité routière).

Les données de position d'un élément mobile selon les modes de réalisation de l'invention proviennent d'une pluralité de sources de données de positionnement. Les données de position peuvent comprendre:
- des données de positions acquises par des capteurs de position analogiques (ex. potentiomètre) ou numériques embarqués dans un élément mobile ;
- des données de géolocalisation par satellites (ex. des données GPS) calculées par un récepteur de signaux satellitaires (ex. récepteur GPS) et transmises à un enregistreur de données ;
- des données provenant d'un radar de contrôle routier (radar fixe ou embarqué dans un véhicule routier mobile) ;
- des données provenant d'un radar de contrôle aérien (ex. les radars primaires, les radars secondaires) ;
- des données provenant d'un radar ferroviaire (ex. radar de passages à niveaux et radars de franchissement) ;
- des données provenant d'un système de multilatération composé de plusieurs balises qui reçoivent les signaux émis par le transpondeur d'un avion pour le localiser.
- des données de position déterminées selon un système ADS-C (acronyme de 'Automatic Dépendant Surveillance-Contract' en langue anglo-saxonne) dans lequel un avion utilise ses systèmes de navigation satellitaires ou intertiels pour automatiquement déterminer et transmettre sa position à un centre de traitement ;
- des données de position déterminées selon un système ADS-B (acronyme de 'Automatic Dépendant Surveillance-Broadcast' en langue anglo-saxonne) dans lequel un avion utilise ses systèmes de navigation satellitaires ou interiels pour automatiquement déterminer et diffuser sa position ainsi que d'autres informations comme la vitesse et l'indicatif de vol.

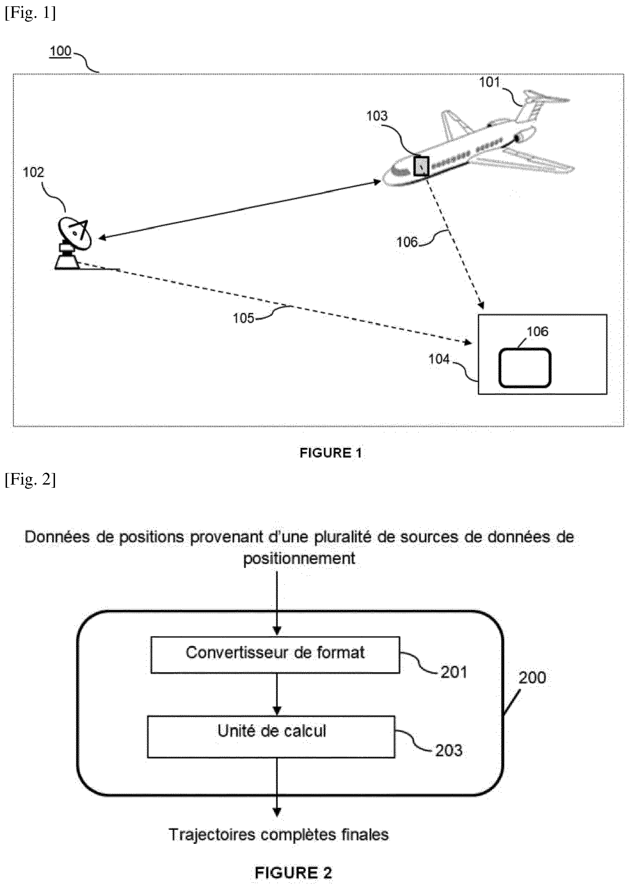

La figure 1 représente un exemple d'environnement dans lequel peut être utilisé un dispositif et un procédé pour la détermination de trajectoire d'au moins un élément mobile à partir de données de position provenant d'une pluralité de sources de données de positionnement dans un système de surveillance 100.

Les modes de réalisation de l'invention peuvent être utilisés dans divers systèmes comprenant, à titre d'exemples non limitatifs:
- les systèmes de navigation de tout type de véhicule (ex. voitures, camions, autobus, motos, machines agricoles, trains, aéronefs, navires) pour la gestion du trafic routier, la gestion du trafic ferroviaire, la gestion du trafic maritime, la gestion du trafic aérien, la détection de franchissement de vitesse, et pour les activités ludiques comme la pratique de la randonnée ou le vélo;
- les systèmes de surveillance par exemple pour la surveillance des frontières et des sites sécurisés, la surveillance des lieux publics, l'assistance aux personnes;
- les systèmes de sécurité par exemple pour le contrôle d'accès à des sites privés, l'analyse du comportement de personnes dans des lieux publics (ex. aéroports, centres commerciaux, etc.).

Selon certains modes de réalisation, le système de surveillance 100 peut être un système de contrôle du trafic aérien mis en place pour le contrôle du trafic réel impliquant au moins un aéronef 101 mobile. Le système de surveillance 100 peut être configuré pour assurer le suivi de la trajectoire de l'aéronef 101 en se basant au moins sur des données de position 105 provenant d'un radar 102 (primaire ou secondaire) et sur des données de position 106 transmises par l'aéronef 101 (ex. des données provenant de données de géolocalisation satellitaires calculées par un récepteur 103, des données provenant d'un système ADS-C, ou des données provenant d'un système ADS-B). Ces données de position peuvent être communiquées à un centre de traitement 104 configuré pour traiter et analyser ces données de position pour des fins de contrôle et de gestion du trafic aérien dans le système de surveillance 100.

Les modes de réalisation de l'invention fournissent un dispositif 106 pour la détermination de trajectoire d'au moins un élément mobile à partir de données de positions provenant d'une pluralité de sources de données de positionnement. Dans le mode de réalisation de la figure 1, le dispositif 106 est mis en œuvre au niveau du centre de traitement 104 d'un système de surveillance 100 pour déterminer la trajectoire d'au moins un aéronef 101.

La figure 2 est un diagramme représentant un dispositif 106 pour la détermination de la trajectoire d'au moins un élément mobile à partir de données de position provenant d'une pluralité de sources de données, selon certains modes de réalisation de l'invention.

Les données de position provenant d'une pluralité de sources de données de positionnement peuvent avoir des formats différents. Le dispositif 106 peut comprendre un convertisseur de format 201 configuré pour convertir les données de position brutes reçues dans un même format de données. Une donnée de position convertie (aussi référencée 'donnée de position') indique la position d'un élément mobile selon les axes x, y, et z correspondant respectivement à une longitude, une latitude, et une altitude, ainsi qu'une valeur temporelle représentant le temps (temps universel coordonné).

A partir de ces données de position, le dispositif 106 est configuré pour déterminer une trajectoire finale complète pour chaque élément mobile détecté suivant un traitement continu à fenêtre d'observation glissante.

Selon certains modes de réalisation, le dispositif 106 peut comprendre une unité de calcul 203 configurée pour recevoir en continu les données de position provenant d'une pluralité de sources de données de positionnement.

Selon certains modes de réalisation, l'unité de calcul 203 peut être configurée, pendant une phase d'initialisation, pour classifier un nombre donné de positions relatives à au moins un élément mobile détecté en appliquant un premier algorithme de classification de données au nombre donné de positions, ce qui fournit une trajectoire initiale relative à chaque élément mobile détecté. L'unité de calcul 203 peut être en outre configurée pour exécuter un traitement en continu à fenêtre d'observation glissante pour déterminer, à chaque fenêtre d'observation courante une trajectoire complète pour chaque élément mobile détecté. Plus précisément, l'unité de calcul 203 peut être configuré, à chaque fenêtre d'observation courante, à :
- classifier chaque nouvelle position détectée reçue pendant la fenêtre d'observation courante dans au moins une trajectoire en appliquant un second algorithme de classification de données;
- déterminer, pour chaque élément mobile détecté, toutes les positions relatives à l'élément mobile détecté parmi le nombre donné de positions relatives à au moins un élément mobile détecté et les nouvelles positions détectées reçues pendant la fenêtre d'observation courante;
- déterminer une trajectoire complète intermédiaire pour chaque élément mobile détecté en appliquant un algorithme d'interpolation à au moins une trajectoire relative à l'élément mobile détecté et à toutes les positions relatives à l'élément mobile détecté, et
- déterminer une trajectoire complète finale pour chaque élément mobile détecté à partir de la trajectoire complète intermédiaire relative à chaque élément mobile détecté en appliquant un algorithme apte à supprimer, de la trajectoire complète intermédiaire, les positions non relatives à l'élément mobile détecté.

Selon certains modes de réalisation, le premier algorithme de classification de données peut être un algorithme d'apprentissage machine.

Selon un mode de réalisation, le premier algorithme de classification de données peut être un algorithme d'apprentissage machine supervisé qui associe des données d'entrée à des données prédites à l'aide d'une fonction déterminée à partir de données d'apprentissage étiquetées.

Selon certains modes de réalisation dans lesquels le premier algorithme de classification est un algorithme d'apprentissage machine supervisé, le premier algorithme peut être entrainé pendant la phase d'apprentissage en utilisant comme données d'apprentissage les données de positions provenant des sources multiples de données de positionnement et au moins une trajectoire prédéterminée. L'au moins une trajectoire prédéterminée peut être une trajectoire partielle prédéterminée par exemple par un composant logiciel ou matériel configuré pour calculer des trajectoires à partir de données de position, ou une trajectoire complète prédéterminée.

Selon certains modes de réalisation, le choix du nombre donné de positions peut être fait pour répondre à des spécifications ou des exigences en termes des performances de l'algorithme mis en œuvre pour réaliser la classification de données. Selon ces modes de réalisation, la phase d'initialisation, pendant laquelle l'unité de calcul 203 est configurée pour classifier un nombre donné de positions relatives à au moins un élément mobile détecté, peut être associée à une erreur de classification, le nombre donné de positions relatives à au moins un élément mobile détecté étant prédéterminé de façon à ce que l'erreur de classification est comprise dans un intervalle de confidence prédéfini. L'intervalle de confidence permet de quantifier et d'estimer l'incertitude d'une estimation réalisée par l'algorithme d'apprentissage machine.

Selon certains modes de réalisation, le premier algorithme de classification peut être un algorithme d'apprentissage machine supervisé choisi dans un groupe comprenant, sans limitations, les machines vectorielles de support (SVM), la régression linéaire, la régression logistique, les forêts aléatoires, les arbres de décision, les algorithmes du voisin le plus proche, les réseaux de neurones, et l'apprentissage par similarité.

Selon un mode de réalisation, le premier algorithme de classification de données peut être un algorithme d'apprentissage supervisé à un nombre d'entrées variables et un nombre de sorties fixes combinant un réseau de neurones entièrement connecté avec un réseau de neurones convolutif à une dimension.

Selon certains modes de réalisation, l'unité de calcul 203 peut être configurée pour classifier chaque nouvelle position détectée reçue dans la trajectoire initiale relative à un élément mobile détecté si la nouvelle position détectée reçue est relative à un de l'au moins un élément mobile détecté dont une trajectoire initiale a été déterminée à la phase d'initialisation, l'unité de calcul 203 étant configurée pour classifier la nouvelle position détectée reçue dans une nouvelle trajectoire si la nouvelle position détectée reçue n'est pas relative à un élément mobile détecté. Cette position indique dans ce cas la présence d'un nouvel élément mobile dans la zone surveillée dans un système de surveillance.

Selon certains modes de réalisation, le second algorithme de classification de données peut être un algorithme d'apprentissage machine.

Selon certains modes de réalisation, l'algorithme d'interpolation peut être un algorithme d'apprentissage machine.

Dans un mode de réalisation, l'algorithme d'interpolation peut être un algorithme d'apprentissage machine supervisé à un nombre d'entrées variables et un nombre de sorties variables combinant un réseau de neurones entièrement connecté avec un réseau de neurones convolutif uni-dimensionnel.

Selon un autre mode de réalisation, l'algorithme d'interpolation peut être un algorithme d'apprentissage machine de type forêts aléatoires.

Selon certains modes de réalisation, l'algorithme apte à supprimer les positions relatives à l'élément mobile détecté peut être un algorithme d'apprentissage machine supervisé. En particulier, l'algorithme peut utiliser comme données d'apprentissage les données de position provenant de la pluralité de sources de données de positionnement, les trajectoires complètes intermédiaires déterminées en appliquant l'algorithme d'interpolation, et la classification de chaque nouvelle position détectée reçue pendant une fenêtre d'observation courante en appliquant le second algorithme de classification de données. L'algorithme permet d'éliminer les objets stationnaires et mobiles qui sont différentes des éléments mobiles suivis ou cibles.

Selon certains modes de réalisation dans lesquels l'algorithme apte à supprimer les positions relatives à l'élément mobile détecté est un algorithme d'apprentissage machine supervisé, l'algorithme peut utiliser comme données d'apprentissage une ou plusieurs trajectoires prédéterminées en relation avec au moins un élément mobile détecté.

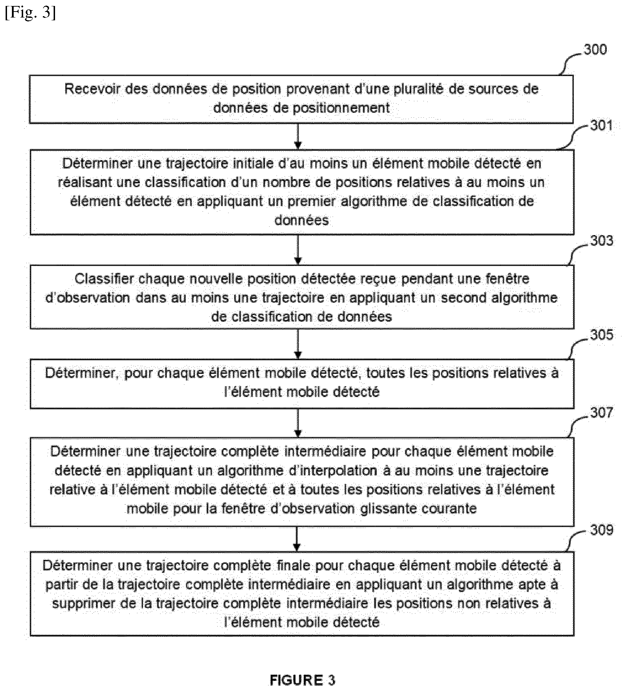

En référence à la figure 3, les modes de réalisation de l'invention fournissent en outre un procédé pour la détermination de la trajectoire d'au moins un élément mobile à partir de données de position provenant d'une pluralité de sources de données de positionnement. Le procédé selon l'invention peut comprendre une phase d'initialisation et un traitement en continu par fenêtre d'observation glissante pour déterminer, de façon continue et en temps presque réel, une trajectoire complète pour au moins un élément mobile détecté.

A l'étape 300, des données de position provenant d'une pluralité de sources de données de positionnement peuvent être reçues. L'étape 300 peut comprendre une sous-étape de conversion des données de position reçues dans un même format de données lorsque les données de position provenant d'une multitude de sources de données de positionnement ont des formats différents.

A l'étape 301, une trajectoire initiale d'au moins un élément mobile détecté peut être déterminée en classifiant un nombre donné de positions relatives à au moins un élément mobile détecté, la classification du nombre donné de positions relatives à au moins un élément mobile détecté étant réalisée en appliquant un premier algorithme de classification de données au nombre donné de positions relatives à au moins un élément mobile détecté.

Selon certains modes de réalisation, le premier algorithme de classification de données peut être un algorithme d'apprentissage machine.

Selon un mode de réalisation, le premier algorithme de classification de données peut être un algorithme d'apprentissage machine supervisé qui associe des données d'entrée à des données prédites à l'aide d'une fonction déterminée à partir de données d'apprentissage étiquetées.

Selon certains modes de réalisation dans lesquels le premier algorithme de classification est un algorithme d'apprentissage machine supervisé, le premier algorithme peut être entrainé pendant la phase d'apprentissage en utilisant comme données d'apprentissage les données de positions provenant des sources multiples de données de positionnement et au moins une trajectoire prédéterminée. L'au moins une trajectoire prédéterminée peut être une trajectoire partielle prédéterminée par exemple par un composant logiciel ou matériel configuré pour calculer des trajectoires à partir de données de position, ou une trajectoire complète prédéterminée.

Selon certains modes de réalisation, le choix du nombre donné de positions peut être fait pour répondre à des spécifications ou des exigences en termes des performances de l'algorithme mis en œuvre pour réaliser la classification de données. Selon ces modes de réalisation, la phase d'initialisation de l'étape 301, pendant laquelle un nombre donné de positions relatives à au moins un élément mobile détecté est classifié, peut être associée à une erreur de classification, le nombre donné de positions relatives à au moins un élément mobile détecté étant prédéterminé de façon à ce que l'erreur de classification est comprise dans un intervalle de confidence prédéfini. L'intervalle de confidence permet de quantifier et d'estimer l'incertitude d'une estimation réalisée par l'algorithme d'apprentissage machine.

Selon certains modes de réalisation, le premier algorithme de classification peut être un algorithme d'apprentissage machine supervisé choisi dans un groupe comprenant, sans limitations, les machines vectorielles de support (SVM), la régression linéaire, la régression logistique, les forêts aléatoires, les arbres de décision, les algorithmes du voisin le plus proche, les réseaux de neurones, et l'apprentissage par similarité.

Selon un mode de réalisation, le premier algorithme de classification de données peut être un algorithme d'apprentissage supervisé à un nombre d'entrées variables et un nombre de sorties fixes combinant un réseau de neurones entièrement connecté avec un réseau de neurones convolutif à une dimension.

Le procédé selon l'invention peut comprendre un traitement en continu à fenêtre d'observation glissante, les étapes 303 à 309 correspondant au traitement réalisé à chaque fenêtre d'observation courante.

A l'étape 303 de chaque fenêtre d'observation glissante, chaque nouvelle position détectée reçue pendant la fenêtre d'observation courante peut être classifiée dans au moins une trajectoire en appliquant un second algorithme de classification de données.

Selon certains modes de réalisation, une nouvelle position détectée reçue peut être classifiée dans la trajectoire initiale relative à un élément mobile détecté si la nouvelle position détectée reçue est relative à un de l'au moins un élément mobile détecté dont une trajectoire initiale a été déterminée à la phase d'initialisation, sinon, une nouvelle position détectée reçue peut être classifiée dans une nouvelle trajectoire si la nouvelle position détectée reçue n'est pas relative à un élément mobile détecté.

Selon certains modes de réalisation, le second algorithme de classification de données peut être un algorithme d'apprentissage machine.

A l'étape 305, toutes les positions relatives à chaque élément mobile détecté parmi le nombre donné de positions relatives à au moins un élément mobile détecté et les nouvelles positions détectées reçues pendant la fenêtre d'observation courante peuvent être déterminées.

A l'étape 307, une trajectoire complète intermédiaire peut être déterminée pour chaque élément mobile détecté en appliquant un algorithme d'interpolation à au moins une trajectoire relative à l'élément mobile détecté et à toutes les positions relatives à l'élément mobile détecté.

Selon certains modes de réalisation, l'algorithme d'interpolation peut être un algorithme d'apprentissage machine.

Selon certains modes de réalisation, l'algorithme d'interpolation peut être un algorithme d'apprentissage machine supervisé à un nombre d'entrées variables et un nombre de sorties variables combinant un réseau de neurones entièrement connecté avec un réseau de neurones convolutif uni-dimensionnel.

Selon certains modes de réalisation, l'algorithme d'interpolation peut être un algorithme d'apprentissage machine de type forêts aléatoires.

A l'étape 309, une trajectoire complète finale peut être déterminée pour chaque élément mobile détecté à partir de la trajectoire complète intermédiaire relative à l'élément mobile détecté en appliquant un algorithme apte à supprimer, de la trajectoire complète intermédiaire, les positions non relatives à l'élément mobile détecté.

Selon certains modes de réalisation, l'algorithme apte à supprimer les positions relatives à l'élément mobile détecté peut être un algorithme d'apprentissage machine supervisé.

Selon certains modes de réalisation, l'algorithme apte à supprimer les positions non relative à l'élément mobile détecté peut utiliser comme données d'apprentissage les données de position provenant de la pluralité de sources de données de positionnement, les trajectoires complètes intermédiaires déterminées en appliquant l'algorithme d'interpolation, et la classification de chaque nouvelle position détectée reçue pendant une fenêtre d'observation courante en appliquant le second algorithme de classification de données. L'algorithme permet de supprimer les objets stationnaires et mobiles qui sont différentes des éléments mobiles suivis ou cibles.

Selon certains modes de réalisation, l'algorithme apte à supprimer les positions non relatives à l'élément mobile détecté peut utiliser comme données d'apprentissage une ou plusieurs trajectoires prédéterminées en relation avec au moins un élément mobile détecté.

L'invention fournit par ailleurs un produit programme d'ordinateur comprenant des instructions de code permettant d'effectuer les étapes du procédé lorsque ledit programme est exécuté sur un ordinateur.

Le dispositif 106, le procédé et le produit programme d'ordinateur de détermination de trajectoire d'éléments mobiles à partir de données de position provenant d'une pluralité de sources de données de positionnement selon les différents modes de réalisation de l'invention peuvent être mis en œuvre sur un ou plusieurs dispositifs ou systèmes informatiques. En général les routines exécutées pour mettre en œuvre les modes de réalisation de l'invention, qu'elles soient mises en œuvre dans le cadre d'un système d'exploitation ou d'une application spécifique, d'un composant, d'un programme, d'un objet, d'un module ou d'une séquence d'instructions, ou même d'un sous-ensemble de ceux-là, peuvent être désignées dans les présentes comme "code de programme informatique" ou simplement "code de programme ». Le code de programme comprend typiquement des instructions lisibles par ordinateur qui résident à divers moments dans des dispositifs divers de mémoire et de stockage dans un ordinateur et qui, lorsqu'elles sont lues et exécutées par un ou plusieurs processeurs dans un ordinateur, amènent l'ordinateur à effectuer les opérations nécessaires pour exécuter les opérations et/ou les éléments propres aux aspects variés des modes de réalisation de l'invention. Les instructions d'un programme, lisibles par ordinateur, pour réaliser les opérations des modes de réalisation de l'invention peuvent être, par exemple, le langage d'assemblage, ou encore un code source ou un code objet écrit en combinaison avec un ou plusieurs langages de programmation.

## Revendications

1. Procédé pour la détermination de trajectoire d'au moins un élément mobile à partir de données de position provenant d'une pluralité de sources de données de positionnement, mis en œuvre selon une fenêtre d'observation glissante, **caractérisé en ce qu'**il comprend une étape initiale (201) consistant à classifier un ensemble de positions relatives à au moins un élément mobile détecté en appliquant un premier algorithme de classification de données audit ensemble de positions, ce qui fournit une trajectoire initiale relative à chaque élément mobile détecté,
et **en ce que** le procédé comprend les étapes suivantes, mises en œuvre à chaque fenêtre d'observation courante:
- classifier (203) chaque nouvelle position détectée relative à au moins un élément mobile détecté reçue pendant ladite fenêtre d'observation courante dans au moins une trajectoire en appliquant un second algorithme de classification de données;
- identifier (205), pour chaque élément mobile détecté, les positions relatives audit élément mobile détecté parmi ledit ensemble de positions et les nouvelles positions détectées reçues pendant ladite fenêtre d'observation;
- déterminer (207) une trajectoire complète intermédiaire pour chaque élément mobile détecté en appliquant un algorithme d'interpolation à au moins une trajectoire relative audit élément mobile détecté et à toutes les positions relatives audit élément détecté ;
- déterminer (209) une trajectoire complète finale pour chaque élément mobile détecté à partir de la trajectoire complète intermédiaire relative audit chaque élément mobile détecté en appliquant un algorithme apte à supprimer de ladite trajectoire complète intermédiaire les positions non relatives audit élément mobile détecté.

2. Procédé selon la revendication 1, **caractérisé en ce que** ledit premier algorithme de classification de données est un algorithme d'apprentissage machine.

3. Procédé selon la revendication 2, **caractérisé en ce que** ledit algorithme d'apprentissage machine est un algorithme d'apprentissage machine supervisé comprenant une phase d'apprentissage, ladite phase d'apprentissage utilisant comme données d'apprentissage lesdites données de position provenant d'une pluralité de sources de données de positionnement et au moins une trajectoire prédéterminée en relation avec au moins un élément mobile détecté.

4. Procédé selon la revendication 3, **caractérisé en ce que** ledit algorithme d'apprentissage machine supervisé est choisi dans un groupe comprenant les machines vectorielles de support (SVM), la régression linéaire, la régression logistique, les forêts aléatoires, les arbres de décision, les algorithmes du voisin le plus proche, les réseaux de neurones, et l'apprentissage par similarité.

5. Procédé selon l'une quelconque des revendications 3 à 4, **caractérisé en ce que** ledit algorithme d'apprentissage supervisé est un algorithme à un nombre d'entrées variables et un nombre de sorties fixes combinant un réseau de neurones entièrement connecté avec un réseau de neurones convolutif à une dimension.

6. Procédé selon l'une quelconque des revendications précédentes, **caractérisé en ce qu'**une nouvelle position détectée reçue est classifiée dans la trajectoire initiale relative à un élément mobile détecté si ladite nouvelle position détectée reçue est relative à un desdits éléments mobiles détectés, la nouvelle position détectée reçue étant classifiée dans une nouvelle trajectoire si ladite nouvelle position détectée reçue n'est pas relative à un élément mobile détecté.

7. Procédé selon la revendication 1, **caractérisé en ce que** ledit second algorithme de classification de données est un algorithme d'apprentissage machine.

8. Procédé selon la revendication 1, **caractérisé en ce que** ledit algorithme d'interpolation est un algorithme d'apprentissage machine.

9. Procédé selon la revendication 8, **caractérisé en ce que** ledit algorithme d'interpolation est un algorithme à un nombre d'entrées variables et un nombre de sorties variables combinant un réseau de neurones entièrement connecté avec un réseau de neurones convolutif uni-dimensionnel.

10. Procédé selon la revendication 1, **caractérisé en ce que** ledit algorithme apte à supprimer les positions relatives à l'élément mobile détecté est un algorithme d'apprentissage machine supervisé.

11. Procédé selon la revendication 10, **caractérisé en ce que** ledit algorithme utilise comme données d'apprentissage lesdites données de position provenant d'une pluralité de sources de données de positionnement, les trajectoires complètes intermédiaires et la classification de chaque nouvelle position détectée reçue pendant une fenêtre d'observation courante.

12. Procédé selon la revendication 10, **caractérisé en ce que** ledit algorithme utilise comme données d'apprentissage une ou plusieurs trajectoires prédéterminées en relation avec au moins un élément mobile détecté.
